(19) **Europäisches Patentamt / European Patent Office / Office européen des brevets**

(11) **EP 2 621 052 A1**

(12) # EUROPEAN PATENT APPLICATION
published in accordance with Art. 153(4) EPC

(43) Date of publication:
**31.07.2013 Bulletin 2013/31**

(51) Int Cl.:
**H02J 7/04** *(2006.01)*     **H01M 10/44** *(2006.01)*
**H01M 10/48** *(2006.01)*     **H02J 7/10** *(2006.01)*

(21) Application number: **11826654.3**

(22) Date of filing: **10.08.2011**

(86) International application number:
**PCT/JP2011/068222**

(87) International publication number:
**WO 2012/039208 (29.03.2012 Gazette 2012/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.09.2010 JP 2010210884**

(71) Applicant: **Panasonic Corporation Osaka 571-8501 (JP)**

(72) Inventors:
• **TAKAHASHI, Atsushi Osaka 540-6207 (JP)**
• **KATSURA, Yoshinori Osaka 540-6207 (JP)**

(74) Representative: **Grünecker, Kinkeldey, Stockmair & Schwanhäusser Leopoldstrasse 4 80802 München (DE)**

(54) **CHARGING DEVICE**

(57) A charging device includes a charge controller (14) which receives input of voltages at two ends of a shunt resistor (13) in synchronization with turning on of a switching device (12), sets an on-time during which the switching device (12) is turned on based on the inputted voltages at the two ends of the shunt resistor (13), and controls a charge current of a secondary battery (11). A resistance value of the shunt resistor (13) is set equal to or above a value obtained by dividing a least resolution of an A/D conversion voltage when the charge controller (14) converts an inputted analog voltage into a digital voltage by a minimum detectable value of the charge current of the secondary battery (11).

# FIG. 1

EP 2 621 052 A1

**Description**

[Technical Field]

The present invention relates to a charging device configured to detect currents inputted to and outputted from a secondary battery and to control charging of the secondary battery on the basis of the detected currents.

[Background Art]

As a technique of this type, a technique described in the following document, for example, has heretofore been known (see PTL 1). The technique described in PTL 1 detects currents inputted to and outputted from a secondary battery by amplifying voltages generated at two ends of a shunt resistor, which is inserted between a negative electrode of the secondary battery and ground (ground potential), with an operational amplifier and then inputting the amplified voltages to a microcomputer.

When the shunt resistor is connected to the negative electrode side of the secondary battery, potential at a connecting point of the shunt resistor and the secondary battery is either positive potential or negative potential depending on the direction of a current flowing through the secondary battery. Specifically, the potential is positive when the secondary battery is being charged while the potential is negative when the secondary battery is discharging.

As described above, the potential at the connecting point of the shunt resistor and the secondary battery, i.e., the potential to be inputted to the operational amplifier, is either positive or negative potential depending on the direction of the current flowing through the secondary battery. Hence, to read the potential accurately, the conventional technique requires an operational amplifier configured to invert the polarity of the potential or to offset the potential.

[Citation List]

[Patent Literature]

[PTL 1]

JP 10-285826 A

[Summary of Invention]

As described above, the operational amplifier is required in the conventional technique of detecting the current flowing through the secondary battery on the basis of the voltages at the two ends of the shunt resistor connected to the negative electrode side of the secondary battery. This requirement leads to an increase in size of a circuit configuration and to a cost increase as well.

The present invention has therefore been made in view of the above-mentioned circumstance, and an object thereof is to provide a simple, small, and low-cost charging device.

An aspect of the present invention is a charging device configured to charge a secondary battery with power supply from outside via a charge adapter configured to be attachably and detachably connected to the charging device. The charging device comprises: a switching device configured to receive the power supply from outside via the charge adapter, the switching device being configured to be turned on and off on the basis of a switching signal to supply a charge current to the secondary battery; a shunt resistor connected between the switching device and a positive electrode of the secondary battery, the shunt resistor being configured to detect a current flowing through the secondary battery; and a charge controller configured to receive input of voltages at two ends of the shunt resistor in synchronization with turning on of the switching device, the charge controller being configured to set an on-time during which the switching device is turned on based on the inputted voltages at the two ends of the shunt resistor to control the charge current of the secondary battery. Here, a resistance value of the shunt resistor is set equal to or above a value obtained by dividing a least resolution of an A/D conversion voltage when the charge controller converts an inputted analog voltage into a digital voltage by a minimum detectable value of the charge current of the secondary battery.

The charge controller may set the on-time during which the switching device is turned on based on peak voltages at the two ends of the shunt resistor after the switching device is turned on.

The charge controller may set the on-time during which the switching device is turned on based on peak voltages at the two ends of the shunt resistor after the switching device is turned on, and voltages at the two ends of the shunt resistor at a point subsequent to occurrence of the peak voltages and after a lapse of a predetermined time period since the switching device is turned on.

The charge controller may set the on-time during which the switching device is turned on while turning off the switching device when a voltage difference between the two ends of the shunt resistor after the switching device is turned on becomes equal to or below a predetermined constant value.

The charge controller may calculate cumulative values of the voltages at the two ends of the shunt resistor after the switching device is turned on, and may set the on-time during which the switching device is turned on based on the calculated cumulative values.

The charge controller may compare the voltage at one end of the shunt resistor after the switching device is turned on with predetermined upper limit value and lower limit value, and may turn off the switching device and thereby may terminate a charging operation when the voltage at the one end of the shunt resistor is equal to or above the upper limit value or equal to or below the lower limit value.

The charge controller may acquire a voltage difference between the two ends of the shunt resistor after the switching device is turned on for a period of predetermined cycles of the switching signal, may judge a magnitude of a fluctuation in the voltage difference between the two ends of the shunt resistor based on a result of comparison of the acquired voltage difference between the two ends of the shunt resistor with a predetermined judgment value, and may judge a type of the charge adapter based on the magnitude of the fluctuation in the voltage difference between the two ends of the shunt resistor.

According to the present invention, the shunt resistor is connected to the positive electrode side of the secondary battery, and the resistance value of the shunt resistor is set equal to or above the value obtained by dividing the least resolution of the A/D conversion voltage of the charge controller by the minimum detectable value of the charge current of the secondary battery. Thus, the charge current can be detected without subjecting the voltage acquired at the shunt resistor to processing such as amplification, and a charging operation can be controlled properly. As a consequence, the present invention can provide a simple, small, and low-cost charging device.

[Brief Description of Drawings]

[Fig. 1]

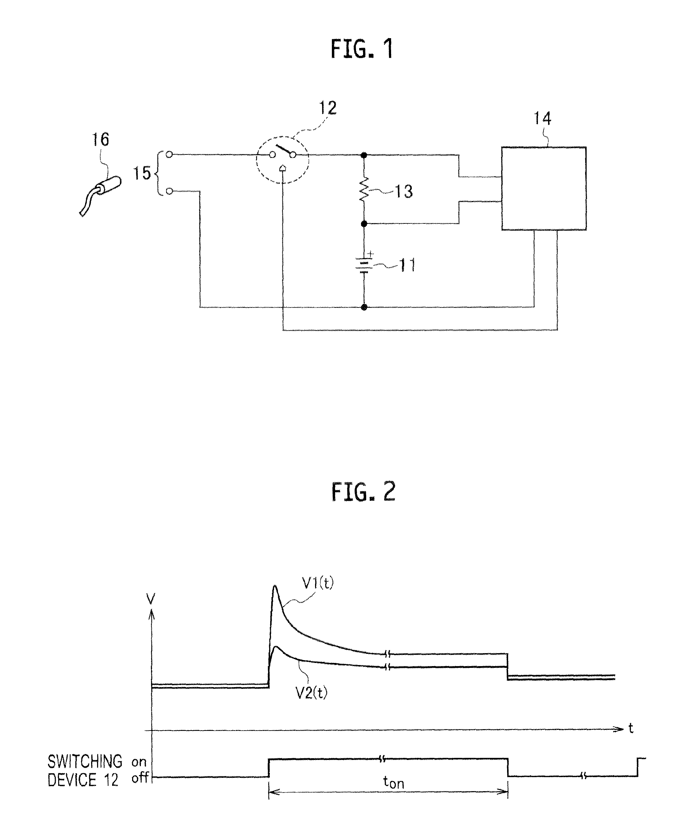

Fig. 1 is a view showing a configuration of a charging device according to a 1st embodiment of the present invention.
[Fig. 2]
Fig. 2 is a timing chart showing changes in voltages at two ends of a shunt resistor and in a switching signal according to the 1st embodiment of the present invention.
[Fig. 3]

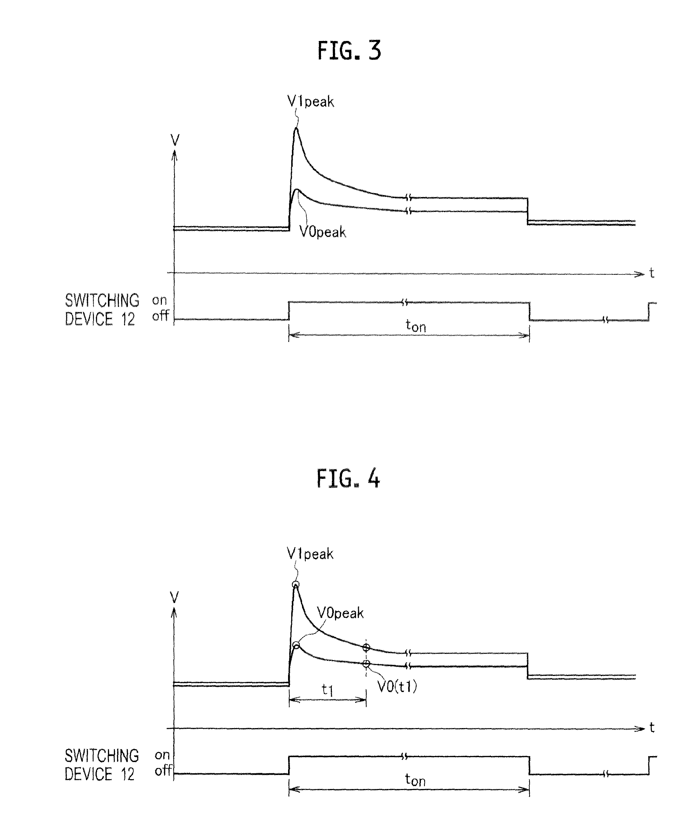

Fig. 3 is a timing chart showing changes in voltages at two ends of a shunt resistor and in a switching signal according to a 2nd embodiment of the present invention.
[Fig. 4]
Fig. 4 is a timing chart showing changes in voltages at two ends of a shunt resistor and in a switching signal according to a 3rd embodiment of the present invention.
[Fig. 5]

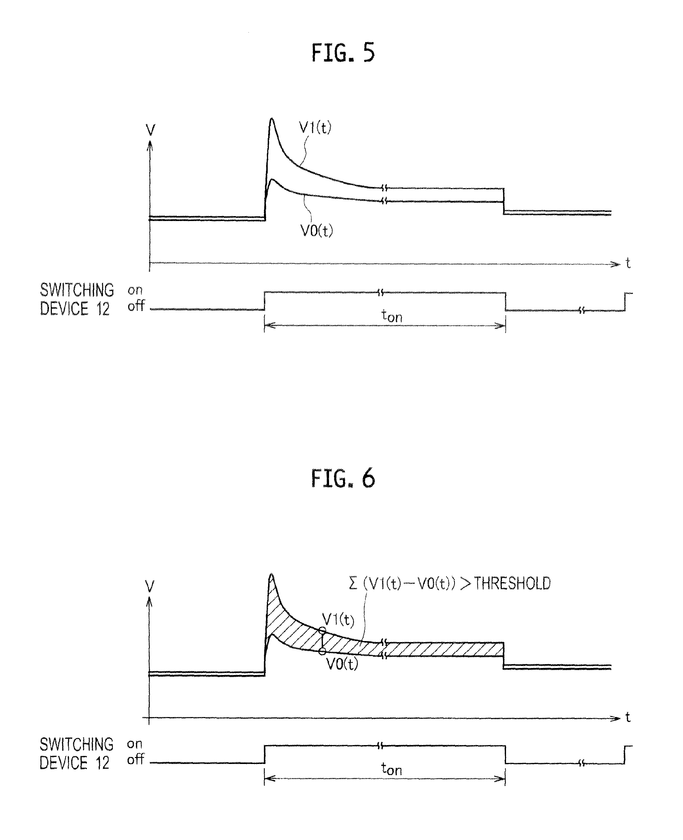

Fig. 5 is a timing chart showing changes in voltages at two ends of a shunt resistor and in a switching signal according to a 4th embodiment of the present invention.
[Fig. 6]
Fig. 6 is a timing chart showing changes in voltages at two ends of a shunt resistor and in a switching signal according to a 5th embodiment of the present invention.
[Fig. 7]

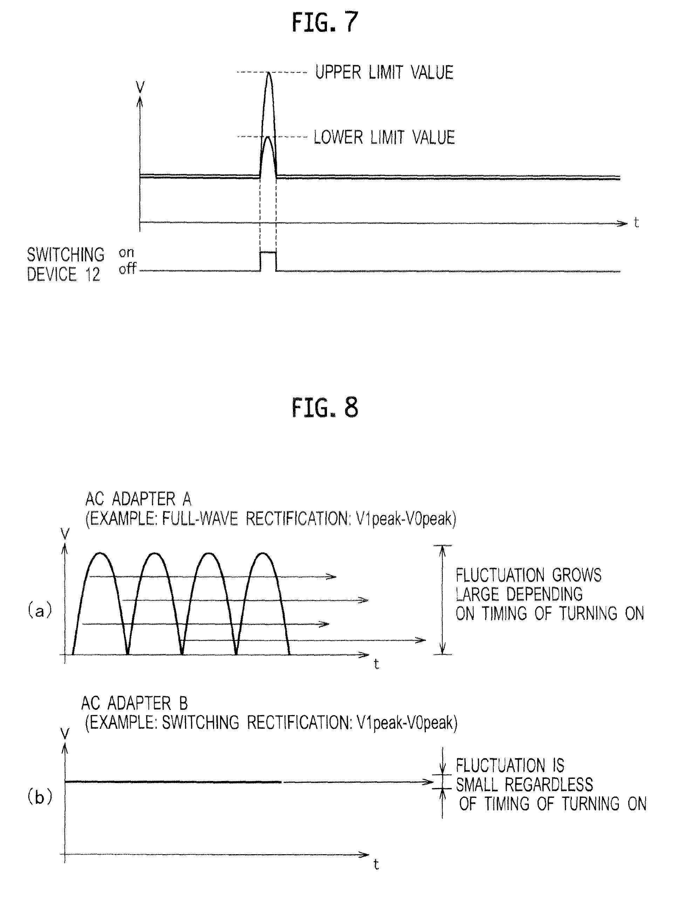

Fig. 7 is a timing chart showing changes in voltages at two ends of a shunt resistor and in a switching signal according to a 6th embodiment of the present invention.
[Fig. 8]
Fig. 8 is a view showing voltage waveforms outputted from different types of AC adapters according to a 7th embodiment of the present invention.

[Description of Embodiments]

Embodiments for carrying out the present invention will be described below with reference to the drawings.

[1st Embodiment]

Fig. 1 is a view showing a configuration of a charging device according to a 1st embodiment of the present invention. The charging device of the 1st embodiment shown in Fig. 1 includes a secondary battery 11, a switching device 12, a shunt resistor 13, and a charge controller 14. The charging device can function while being embedded in a rechargeable electric apparatus such as an electric shaver, an electric hair clipper, a hair remover, an electric tooth brush and the like.

The secondary battery 11 is made of a battery such as a nickel-metal hydride battery and a NiCd (nickel-cadmium) battery. The secondary battery 11 is charged by DC power, which is obtained by converting AC power into direct current. Here, the AC power is supplied from an AC commercial power supply in a range from about 100 V to 240 V through an AC adapter 16 that can be attachably and detachably connected to adapter connection terminals 15.

The switching device 12 is connected between one of the adapter connection terminals 15 and the shunt resistor 13, and is made of a transistor, for example. The switching device 12 receives the DC power fed through the AC adapter 16 and undergoes on-off control on the basis of a switching signal, thereby controlling and adjusting a charge current to be supplied to the secondary battery 11.

The shunt resistor 13 is connected between the switching device 12 and a positive electrode (+ electrode) side of the secondary battery 11. The shunt resistor 13 detects a current, which flows through the secondary battery 11, on the basis of voltages V0 and V1 at two ends of the shunt resistor 13. Specifically, the shunt resistor 13 detects the charge current supplied to the secondary battery 11 or a discharge current discharged from the secondary battery 11. The shunt resistor 13 has low resistance in a range from several milliohms to several hundreds of milliohms, for example. Here, its resistance value is set in relation to resolution of A/D conversion to be described later.

The charge controller 14 functions as the center of control which controls operations of the charging device. The charge controller 14 is implemented, for example, by a microcomputer equipped with hardware resources including a CPU, a storage device, and so forth which are required in a computer that controls a variety of operational processing based on programs. Accordingly, a charging operation of the secondary battery 11 is controlled through execution of a processing program by the CPU of the microcomputer constituting the charge controller 14. The charge controller 14 is connected to common ground (ground potential) to which a negative electrode (- electrode) of the secondary battery 11 is connected.

The charge controller 14 provides the switching signal to the switching device 12 and performs the on-off control of the switching device 12 on the basis of the switching signal. In the on-off control, the charge current is controlled to increase or decrease by variably controlling a duty ratio of the switching signal, namely, on-time per cycle of the switching signal . Thus, the charge controller 14 performs charge control of the secondary battery 11 by supplying a desired charge current, which corresponds to a battery voltage of the secondary battery 11, to the secondary battery 11, for example.

The charge controller 14 inputs the voltages V0 and V1 generated at the two ends of the shunt resistor 13 and determines the duty ratio of the switching signal, namely, the on-time during which the switching device 12 is turned on. If the voltages V0 and V1 inputted to the charge controller 14 are likely to exceed a power supply voltage of the charge controller 14, the voltages V0 and V1 are divided and stepped down by a resistor, for example, and are then inputted to the charge controller 14. The charge controller 14 controls supply of the charge current to the secondary battery 11 while performing the on-off control of the switching device 12 by the above-described switching signal, and charges the secondary battery 11 until the secondary battery 11 reaches full charge.

Various methods have heretofore been known as methods for judging whether or not the secondary battery 11 is fully charged. The methods include, for instance, a method of calculating a battery capacity at the present moment by calculating currents each corresponding to one cycle of the switching signal in the on-off control by the switching device 12 and accumulating the currents thus calculated, a method of making a judgment based on an absolute value of the battery voltage of the secondary battery 11, a method of making a judgment by detecting a drop in the battery voltage in an amount of $-\Delta V$ during the charge, and a method of combining any of these methods.

The resistance value of the shunt resistor 13 is determined as described below.

Here, the power supply voltage of the charge controller 14 is defined as VDD (V) while resolution of an A/D conversion function of the charge controller 14 for converting an inputted analog signal into a digital signal in the course of internal processing is assumed to be N bits, for example. In this case, a minimum voltage value detectable in the A/D conversion, i.e., the least resolution (LSB) of an A/D conversion voltage is expressed by the following formula (1):

(Numerical Expression 1)

$$\text{Least Resolution (LSB)} = VDD/2^N \text{ (V)} \qquad (1)$$

Hence, 1 LSB is equal to $VDD/2^N$ (V).

Next, if the minimum value of the charge current to be detected (the least resolution of the charge current) is defined as Imin (A), then a relation of Imin with a resistance value R of the shunt resistor 13 is expressed by the following formula (2):

(Numerical Expression 2)

$$Imin \times R \geq VDD/2^N \qquad\qquad (2)$$

Hence, the resistance value R of the shunt resistor 13 is expressed by the following formula (3):

(Numerical Expression 3)

$$R \geq (VDD/2^N)/Imin \qquad\qquad (3)$$

Thus, the resistance value of the shunt resistor 13 is set equal to or above (the least resolution of the A/D conversion voltage) / (the minimum detectable value of the charge current).

For example, if the power supply voltage VDD of the charge controller 14 is about 3 V and the resolution of the A/D conversion is 10 bits, then the least resolution (LSB) of the A/D conversion voltage is about 2.9 mV. Further, if the minimum detectable current value of the charge current is about 10 mA, then the resistance value R of the shunt resistor 13 is set to about 290 mΩ.

As described above, when the minimum detectable current value of the charge current is set constant, the resistance value R of the shunt resistor 13 can be made smaller as the resolution of the A/D conversion of the charge controller 14 is made higher.

Fig. 2 is a timing chart showing relationships of, the voltages V0 and V1 at the two ends of the shunt resistor 13 after the switching device 12 is turned on, with the on-time of the switching signal.

Regarding the voltages V0 and V1 at the two ends of the shunt resistor 13, as shown in Fig. 2, surge voltages occur when the switching device 12 is turned on, due to a transient phenomenon attributed to a capacitance component of the AC adapter 16 and the shunt resistor 13. Thereafter, each of the voltages gradually transitions into a constant voltage phase. Upon the changes in voltages as described above, voltages V0 (t) and V1(t) at the two ends of the shunt resistor 13 at a point immediately after the switching device 12 is turned on are inputted to the charge controller 14. The charge controller 14 can calculate the charge current of the secondary battery 11 by using the inputted voltages and the resistance value R of the shunt resistor 13. Based on the charge current thus detected, the charge controller 14 sets the on-time ($t_{on}$) in one cycle of the switching signal as shown in Fig. 2, and controls the charging of the secondary battery 11 by adjusting and controlling the charge current supplied to the secondary battery 11. The relationships of the voltages V0 (t) and V1(t) at the two ends of the shunt resistor 13 with the on-time of the switching signal can be acquired and determined by an experiment using an actual device, for example. The relationships between the voltages and the on-time thus determined are prepared by being stored as table data in a storage device of the charge controller 14, for example, and the on-time of the switching signal is sequentially set by referring to the table data. Alternatively, it is also possible to define the relationships between the voltages and the on-time with an operational expression and to calculate and set the on-time of the switching signal on the basis of the operational expression.

As described above, the 1st embodiment adopts the configuration to connect the shunt resistor 13 for detecting the charge current or the discharge current of the secondary battery 11 to the positive electrode side of the secondary battery 11 and to detect the voltages V0 and V1 at the two ends of the shunt resistor 13. The voltages V0 and V1 at the two ends of the shunt resistor 13 show positive potential irrespective of the direction of the current as a result of adopting this configuration. Accordingly, it is unnecessary to provide a structure such as an operational amplifier for inverting the polarity of potential generated at the shunt resistor 13 or for offsetting the potential.

In the meantime, detection of the voltages V0 and V1 at the two ends of the shunt resistor 13 makes it possible to eliminate adverse effects caused by fluctuations in the internal resistance, the battery voltage, and the like of the secondary battery 11 attributed to a change in the ambient temperature. Thus, the charging device can accurately detect the current flowing through the secondary battery 11.

Furthermore, the resistance value of the shunt resistor 13 is set such that the voltage equal to or above the least resolution at the time of A/D conversion is inputted to the charge controller 14 when the charge current of the secondary battery 11 is detected. Adoption of this configuration allows the voltages generated at the shunt resistor 13 to be inputted to the charge controller 14 without being amplified. Hence, it is unnecessary to provide a structure such as an operational amplifier for amplifying the voltages.

Accordingly, the structure of the charging device can be simplified, downsized, and reduced in cost as compared to the related art. In the meantime, since amplification circuits such as operational amplifiers vary largely among the individual pieces, each device generally undergoes correction of such a variation, which may lead to deterioration in detection accuracy. On the other hand, the 1st embodiment does not require the amplification circuit such as the operational amplifier, and thus the current flowing through the secondary battery 11 can be detected accurately. As a consequence, the charge current can be accurately detected even when the charge current differs depending on the type of the secondary battery 11 or the type of the AC adapter 16. Accordingly, the charging device can properly control the charging operation of the secondary battery 11 in various types of the secondary battery 11 and/or the AC adapter 16.

[2nd Embodiment]

Fig. 3 is a timing chart according to a 2nd embodiment of the present invention which shows relationships of, the voltages V0 and V1 at the two ends of the shunt resistor 13 after the switching device 12 is turned on, with the on-time of the switching signal. Here, the configuration of the 2nd embodiment is the same as that of the 1st embodiment.

In the 2nd embodiment, as shown in the timing chart of Fig. 3, peak voltages V0peak and V1peak of the voltages V0 and V1 at the two ends of the shunt resistor 13 after the switching device 12 is turned on are inputted to the charge controller 14. The charge controller 14 can calculate the charge current of the secondary battery 11 by using the inputted peak voltages V0peak and V1peak and the resistance value R of the shunt resistor 13. Based on the charge current thus detected, the charge controller 14 sequentially sets the on-time ($t_{on}$) in one cycle of the switching signal as shown in Fig. 3, and controls the charging of the secondary battery 11 by adjusting and controlling the charge current supplied to the secondary battery 11.

Relationships of the peak voltages V0peak and V1peak at the two ends of the shunt resistor 13 with the on-time of the switching signal can be acquired and determined by an experiment using an actual device, for example. The relationships between the peak voltages and the on-time thus determined are prepared by being stored as table data in the storage device of the charge controller 14, for example, and the on-time of the switching signal is sequentially set by referring to the table data. Alternatively, it is also possible to define the relationships between the peak voltages and the on-time with an operational expression and to calculate and set the on-time of the switching signal on the basis of the operational expression.

As described above, the 2nd embodiment can achieve effects similar to those of the 1st embodiment.

[3rd Embodiment]

Fig. 3 is a timing chart according to a 3rd embodiment of the present invention which shows relationships of, the voltages V0 and V1 at the two ends of the shunt resistor 13 after the switching device 12 is turned on, with the on-time of the switching signal. Here, the configuration of the 3rd embodiment is the same as that of the 1st embodiment.

In the 3rd embodiment, as shown in the timing chart of Fig. 4, the charge controller 14 receives input of the peak voltages V0peak and V1peak of the voltages V0 and V1 at the two ends of the shunt resistor 13 after the switching device 12 is turned on. In addition, the charge controller 14 receives input of voltages V0(t1) and V1 (t1) after a lapse of a predetermined time period (t1) since the point of occurrence of the peak voltages. The charge controller 14 can calculate the charge current of the secondary battery 11 by using the inputted peak voltages V0peak and V1peak, voltages V0(t1) and V1(t1), and the resistance value R of the shunt resistor 13. Based on the charge current thus detected, the charge controller 14 sets the on-time ($t_{on}$) in one cycle of the switching signal for each cycle as shown in Fig. 3, and controls the charging of the secondary battery 11 by adjusting and controlling the charge current supplied to the secondary battery 11.

Relationships of the peak voltages V0peak and V1peak as well as the voltages V0(t1) and V1(t1) at the two ends of the shunt resistor 13 with the on-time of the switching signal can be acquired and determined by an experiment using an actual device, for example. The relationships among the peak voltages, the voltages, and the on-time thus determined are prepared by being stored as table data in the storage device of the charge controller 14, for example, and the on-time of the switching signal is set by referring to the table data. Alternatively, it is also possible to define the relationships among the peak voltages, the voltages, and the on-time with an operational expression and to calculate and set the on-time of the switching signal on the basis of the operational expression.

As described above, the 3rd embodiment can achieve effects similar to those of the 1st and 2nd embodiments. In addition, the charge current is detected by taking into account the voltages V0(t1) and V1(t1) at the two ends of the shunt resistor 13 after the lapse of the predetermined time period (t1) since the point when the switching device 12 is turned on. Accordingly, detection accuracy of the charge current can be improved by absorbing variations among the AC adapters 16 even when the AC adapters 16 are of the same type. Thus, the charging device can accurately control the charging operation of the secondary battery 11.

[4th Embodiment]

Fig. 5 is a timing chart according to a 4th Embodiment of the present invention which shows relationships of, the voltages V0 and V1 at the two ends of the shunt resistor 13 after the switching device 12 is turned on, with the on-time of the switching signal. Here, the configuration of the 4th Embodiment is the same as that of the 1st embodiment.

In the 4th Embodiment, as shown in the timing chart of Fig. 5, the voltages V0 and V1 at the two ends of the shunt resistor 13 after the switching device 12 is turned on are continuously monitored and inputted to the charge controller 14. The charge controller 14 sets the on-time ($t_{on}$) in one cycle of the switching signal in such a way that the switching signal is turned off when a voltage difference (V1(t)-V0(t)) between the inputted voltages V0 and V1 becomes equal to or below a predetermined first threshold. The charge controller 14 sets the on-time of the switching signal for each cycle as described above, and thus controls the charging of the secondary battery 11 by adjusting and controlling the charge current supplied to the secondary battery 11. Here, the first threshold can be determined by an experiment using an actual device.

As described above, the 4th Embodiment can achieve effects similar to those of the 1st embodiment. In addition, detection accuracy of the charge current can be improved by setting the on-time in one cycle of the switching signal on the basis of the point when the voltages at the two ends of the shunt resistor 13 become equal to or below the first threshold. Thus, the charging device can accurately control the charging operation of the secondary battery 11.

[5th Embodiment]

Fig. 6 is a timing chart according to a 5th embodiment of the present invention which shows relationships of, the voltages V0 and V1 at the two ends of the shunt resistor 13 after the switching device 12 is turned on, with the on-time of the switching signal. Here, the configuration of the 5th embodiment is the same as that of the 1st embodiment.

In the 5th embodiment, as shown in the timing chart of Fig. 6, the voltages V0 and V1 at the two ends of the shunt resistor 13 after the switching device 12 is turned on are continuously monitored and inputted to the charge controller 14. The charge controller 14 can calculate a total amount of the charge current supplied to the secondary battery 11 after the switching device 12 is turned on by using a cumulative value of the voltage differences (V1-V0) between the inputted voltages V0 and V1 and the resistance value R of the shunt resistor 13. Accordingly, the charge controller 14 sequentially sets the on-time ($t_{on}$) in one cycle of the switching signal in such a way that the switching signal is turned off when the cumulative value of the voltage differences (V1-V0) exceeds a predetermined second threshold. The charge controller 14 sequentially sets the on-time of the switching signal as described above, and thus controls the charging of the secondary battery 11 by adjusting and controlling the charge current supplied to the secondary battery 11. Here, the second threshold can be determined by an experiment using an actual device.

As described above, the 5th embodiment can achieve effects similar to those of the 1st embodiment. In addition, detection accuracy of the charge current can be improved by setting the on-time in one cycle of the switching signal based on the fact that the cumulative value of the voltage differences between the voltages at the two ends of the shunt resistor 13 exceeds the second threshold. Thus, the charging device can accurately control the charging operation of the secondary battery 11.

[6th Embodiment]

Fig. 7 is a timing chart according to a 6th embodiment of the present invention which shows the voltage V1 at the one end of the shunt resistor 13 after the switching device 12 is turned on, and the switching signal. Here, the configuration of the 6th embodiment is the same as that of the 1st embodiment.

In the 6th embodiment, as shown in the timing chart of Fig. 7, a peak voltage V1peak at the one end of the shunt resistor 13 after the switching device 12 is turned on is inputted to the switching device 12 charge controller 14. The charge controller 14 compares the inputted peak voltage V1peak with predetermined upper limit voltage and lower limit voltage. As a result of comparison, if the peak voltage V1peak exceeds the upper limit voltage or falls below the lower limit voltage, then the charge controller 14 presumes that an unsuitable AC adapter 16 is connected to the adapter connection terminals 15 instead of the qualified AC adapter 16 that is compatible with the charging device. In this case, from the viewpoint of safety, the charging operation is terminated by turning off the switching device 12. Here, the upper limit voltage and the lower limit voltage can be acquired and determined by an experiment using an actual device.

As described above, the 6th embodiment can detect connection of the unsuitable AC adapter 16 to the charging device. Accordingly, it is possible to prevent the charging device from causing fire or smoke due to its abnormal heat generation or the like, and thereby to ensure safety and to avoid damage and the like. Note that the 6th embodiment can be carried out in combination with any of the 1st to 5th embodiments.

[7th Embodiment]

Fig. 8 is a view showing voltage waveforms outputted from different types of AC adapters according to a 7th embodiment of the present invention. Part (a) of Fig. 8 shows a voltage waveform outputted from a power transformer type AC adapter and part (b) of Fig. 8 shows a voltage waveform outputted from a switching type AC adapter. Here, the configuration of the 7th embodiment is the same as that of the 1st embodiment.

In the 7th embodiment, the voltages V0 and V1 at the two ends of the shunt resistor 13 immediately after the switching device 12 is turned on are observed by the charge controller 14 for predetermined cycles (several cycles) of the switching signal. Based on a result of the observation, the charge controller 14 judges the type of the AC adapter 16, namely, as to whether the adapter is of the power transformer type or the switching type.

When the AC adapter 16 is of the power transformer type (full-wave rectification), the voltage fluctuates largely at a frequency of either 60 Hz or 50 Hz corresponding to the power-supply frequency of the commercial AC power supply as shown in Fig. 8 (a). For this reason, a fluctuation in the potential difference (V1-V0) between the two ends of the shunt resistor 13 grows large depending on the timing to turn on the switching device 12. On the other hand, when the AC adapter 16 is of the switching type (switching rectification), the outputted voltage is more stable than the case of the power transformer type as shown in Fig. 8(b). For this reason, the potential difference (V1-V0) between the two ends of the shunt resistor 13 shows a smaller fluctuation depending on the timing to turn on the switching device 12 in comparison with the case of the power transformer type.

The charge controller 14 judges the type of the AC adapter 16 by using the above-described characteristics. For instance, the fluctuations in the potential differences (V1-V0) in terms of the power transformer type and the switching type are acquired in advance by using an actual device, and a judgment value for judging the magnitude of the fluctuation is set on the basis of the acquired fluctuations. The fluctuation in the potential difference (V1-V0) between the two ends of the shunt resistor 13 can be judged by comparing the judgment value with the potential difference (V1-V0) between the two ends of the shunt resistor 13.

After the type of the AC adapter 16 is judged, the on-time of the switching signal is changed depending on the type of the AC adapter thus judged. Specifically, two types of the table data are prepared in terms of the power transformer type and the switching type for use in any of the 1st to 3rd embodiments, and the table data to be used is selected depending on the type of the AC adapter. In the meantime, two types for each of the thresholds are prepared in terms of the power transformer type and the switching type for use in any of the 4th Embodiment to 6, and each threshold to be used is selected depending on the type of the AC adapter.

As described above, the 7th embodiment can optimally control the charge current of the secondary battery 11 in compliance with the characteristic of the AC adapter 16, by changing the on-time of the switching signal depending on the type of the AC adapter 16. Thus, the charging device can accurately control the charging operation of the secondary battery 11. Note that the 7th embodiment can be carried out in combination with any of the 1st to 6th embodiments.

The entire contents of Japanese Patent Application No. 2010-210884 (filing date: September 21, 2010) are incorporated herein by reference.

While the contents of the present invention have been described in conjunction with certain embodiments, it is obvious to those skilled in the art that the invention is not limited only to the above descriptions but various changes and modifications are possible.

[Industrial Applicability]

According to the present invention, a charge current can be detected without subjecting a voltage acquired at a shunt resistor to processing such as amplification, and a charging operation can be properly controlled. As a consequence, the present invention can provide a simple, small, and low-cost charging device.

[Reference Signs List]

| | |
|---|---|
| 11 | secondary battery |
| 12 | switching device |
| 13 | shunt resistor |
| 14 | charge controller |
| 15 | adapter connection terminal |

16    AC adapter

**Claims**

1. A charging device configured to charge a secondary battery with power supply from outside via a charge adapter configured to be attachably and detachably connected to the charging device, comprising:

   a switching device configured to receive the power supply from outside via the charge adapter, the switching device being configured to be turned on and off on the basis of a switching signal to supply a charge current to the secondary battery;
   a shunt resistor connected between the switching device and a positive electrode of the secondary battery, the shunt resistor being configured to detect a current flowing through the secondary battery; and
   a charge controller configured to receive input of voltages at two ends of the shunt resistor in synchronization with turning on of the switching device, the charge controller being configured to set an on-time during which the switching device is turned on based on the inputted voltages at the two ends of the shunt resistor to control the charge current of the secondary battery, wherein
   a resistance value of the shunt resistor is set equal to or above a value obtained by dividing a least resolution of an A/D conversion voltage when the charge controller converts an inputted analog voltage into a digital voltage by a minimum detectable value of the charge current of the secondary battery.

2. The charging device according to claim 1, wherein the charge controller sets the on-time during which the switching device is turned on based on peak voltages at the two ends of the shunt resistor after the switching device is turned on.

3. The charging device according to claim 1, wherein the charge controller sets the on-time during which the switching device is turned on based on peak voltages at the two ends of the shunt resistor after the switching device is turned on, and voltages at the two ends of the shunt resistor at a point subsequent to occurrence of the peak voltages and after a lapse of a predetermined time period since the switching device is turned on.

4. The charging device according to claim 1, wherein the charge controller sets the on-time during which the switching device is turned on while turning off the switching device when a voltage difference between the two ends of the shunt resistor after the switching device is turned on becomes equal to or below a predetermined constant value.

5. The charging device according to claim 1, wherein the charge controller calculates cumulative values of the voltages at the two ends of the shunt resistor after the switching device is turned on, and sets the on-time during which the switching device is turned on based on the calculated cumulative values.

6. The charging device according to any one of claims 1 to 5, wherein the charge controller compares the voltage at one end of the shunt resistor after the switching device is turned on with predetermined upper limit value and lower limit value, and turns off the switching device and thereby terminates a charging operation when the voltage at the one end of the shunt resistor is equal to or above the upper limit value or equal to or below the lower limit value.

7. The charging device according to any one of claims 1 to 6, wherein the charge controller acquires a voltage difference between the two ends of the shunt resistor after the switching device is turned on for a period of predetermined cycles of the switching signal, judges a magnitude of a fluctuation in the voltage difference between the two ends of the shunt resistor based on a result of comparison of the acquired voltage difference between the two ends of the shunt resistor with a predetermined judgment value, and judges a type of the charge adapter based on the magnitude of the fluctuation in the voltage difference between the two ends of the shunt resistor.

## FIG. 1

## FIG. 2

## FIG. 3

## FIG. 4

## FIG. 5

## FIG. 6

# FIG. 7

# FIG. 8

AC ADAPTER A
(EXAMPLE: FULL-WAVE RECTIFICATION: V1peak-V0peak)

(a)

FLUCTUATION GROWS
LARGE DEPENDING
ON TIMING OF TURNING ON

AC ADAPTER B
(EXAMPLE: SWITCHING RECTIFICATION: V1peak-V0peak)

(b)

FLUCTUATION IS
SMALL REGARDLESS
OF TIMING OF TURNING ON

<table>
<tr><td colspan="2" align="center">**INTERNATIONAL SEARCH REPORT**</td><td colspan="2">International application No.<br>PCT/JP2011/068222</td></tr>
</table>

**A. CLASSIFICATION OF SUBJECT MATTER**
*H02J7/04*(2006.01)i, *H01M10/44*(2006.01)i, *H01M10/48*(2006.01)i, *H02J7/10*(2006.01)i

According to International Patent Classification (IPC) or to both national classification and IPC

**B. FIELDS SEARCHED**

Minimum documentation searched (classification system followed by classification symbols)
H02J7/04, H01M10/44, H01M10/48, H02J7/10

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2009-106147 A (Panasonic Corp.),<br>14 May 2009 (14.05.2009),<br>entire text; all drawings<br>& US 2010/0213901 A1 & EP 2207236 A1<br>& WO 2009/044557 A1 & CN 101816092 A | 1-7 |
| A | JP 08-033213 A (Toshiba Battery Co., Ltd.),<br>02 February 1996 (02.02.1996),<br>entire text; all drawings<br>(Family: none) | 1-7 |
| A | JP 2003-153463 A (Hitachi, Ltd.),<br>23 May 2003 (23.05.2003),<br>paragraph [0029]; fig. 5<br>(Family: none) | 1-7 |

☐ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>   07 November, 2011 (07.11.11) | Date of mailing of the international search report<br>   15 November, 2011 (15.11.11) |
| Name and mailing address of the ISA/<br>   Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10285826 A
- JP 2010210884 A